# EUROPEAN PATENT APPLICATION

(11) **EP 2 744 072 A2**
(43) Date of publication of application: **18.06.2014**
(21) Application number: 13196475.1
(22) Date of filing: 10.12.2013
(51) Int. Cl.: H02K 1/16

(54) **Motor**

(30) Priority: 17.12.2012 KR 20120147321
(71) Applicant: LG Innotek Co., Ltd., Seoul 100-714 (KR)
(72) Inventor: Kim, Yong Chul, 100-714 Seoul (KR)
(74) Representative: Zardi, Marco

(57) **Abstract**

Provided is a motor. The motor includes a stator that includes a stator core and a coil that is wound around the stator core, and a rotor that is rotatably disposed in the stator, wherein the stator core includes a plurality of teeth that are radially formed along an inner circumferential surface of the stator core, a plurality of shoes that extend in a circumferential direction from both sides of an end of each of the plurality of teeth, and a tip portion that extends in the circumferential direction from an end of each of the plurality of shoes to contact a tip portion of an adjacent tooth.

## Description

### CROSS-REFERENCE TO RELATED APPLICATION

This application claims priority to and the benefit of Korean Patent Application No. 10-2012-0147321, filed on December 17, 2012, the disclosure of which is incorporated herein by reference in its entirety.

### BACKGROUND

### 1. Field of the Invention

The present invention relates to a motor, and more particularly, to an electronic power steering (EPS) motor.

### 2. Discussion of Related Art

A steering system which is a device for ensuring steering stability of a vehicle functions to help a driver of the vehicle to steer with separate power.

Electronic power steering (EPS) systems having low power loss and high accuracy have recently been used instead of auxiliary steering systems using hydraulic power. An EPS system includes a speed sensor, a torque angle sensor, and a torque sensor.

An electronic control unit (ECU) detects driving conditions by using the sensors included in the EPS system, and drives a motor according to the detected driving conditions. Accordingly, cornering stability may be ensured and a rapid restoring force may be provided, thereby making it possible for a driver to safely drive a vehicle.

A motor (hereinafter, referred to as an "EPS motor") of the EPS system assists torque of a steering wheel so that the driver may steer more efficiently. A brushless direct current (BLDC) motor may be used as the EPS motor. The BLDC motor is a direct current (DC) motor including an electronic commutation mechanism instead of a mechanical contact unit such as a brush or a commutator.

The EPS motor includes a housing whose top is open and a bracket that is coupled to the top of the housing to form an exterior appearance of the EPS motor. A rotor and a stator are received in the housing.

The rotor includes a rotor core and a magnet, and is assembled to surround a rotating shaft. The stator includes a stator core and a coil, and is fixed to an inner circumferential surface of the housing to surround an outer circumferential surface of the rotor. The rotating shaft rotates along with the rotor due to electromagnetic interaction between the rotor and the stator.

A plurality of teeth are radially formed along an inner circumferential surface of the stator core. A slot into which the coil is inserted is formed between adjacent teeth, and both sides of an end of each of the teeth protrude toward an adjacent tooth to form a slot opening.

In general, a magnetic loss component is determined according to a size of a slot opening when a motor is designed. When a width of the slot opening decreases, magnetic loss increases and thus motor output decreases, but cogging torque decreases. On the other hand, when the width of the slot opening increases, magnetic loss decreases and thus motor output increases, but cogging torque increases.

Accordingly, it is important to determine a size of a slot opening in order to achieve optimal motor output and optimal cogging torque. The size of the slot opening may vary according to a motor model.

Cogging torque is defined as a ripple of torque which is necessarily produced in a state where power is not supplied to a motor having a tooth-slot structure. The cogging torque acts as one factor that causes noise and vibration in a motor, and is seriously managed in a motor that requires high perceived quality such as a steering motor.

### SUMMARY OF THE INVENTION

The present invention is directed to a motor that may reduce cogging torque.

According to an aspect of the present invention, there is provided a motor including a stator that includes a stator core and a coil that is wound around the stator core, and a rotor that is rotatably disposed in the stator, wherein the stator core includes a plurality of teeth that are radially formed along an inner circumferential surface of the stator core, a plurality of shoes that extend in a circumferential direction from both sides of an end of each of the plurality of teeth, and a tip portion that extends in the circumferential direction from an end of each of the plurality of shoes to contact a tip portion of an adjacent tooth.

### BRIEF DESCRIPTION OF THE DRAWINGS

The above and other objects, features, and advantages of the present invention will become more apparent to those of ordinary skill in the art by describing in detail exemplary embodiments thereof with reference to the accompanying drawings, in which:
FIG. 1 is a longitudinal-sectional view illustrating a general electronic power steering (EPS) motor;
FIG. 2 is a cross-sectional view illustrating the general EPS motor of FIG. 1;
FIG. 3 is a cross-sectional view illustrating an EPS motor according to an embodiment of the present invention;
FIG. 4 is an enlarged cross-sectional view illustrating a stator core of the EPS motor of FIG. 3;
FIG. 5 is a cross-sectional view illustrating an EPS motor according to another embodiment of the present invention;
FIG. 6 is an enlarged cross-sectional view illustrating a stator core of the EPS motor of FIG. 5; and
FIGS. 7 and 8 are views for describing effects of the EPS motors of FIGS. 3 and 5.

### DETAILED DESCRIPTION OF EXEMPLARY EMBODIMENTS

While exemplary embodiments are capable of various modifications and alternative forms, embodiments thereof are shown by way of example in the drawings and will herein be described in detail. It should be understood, however, that there is no intent to limit exemplary embodiments to the particular forms disclosed, but on the contrary, exemplary embodiments are to cover all modifications, equivalents, and alternatives falling within the scope of the invention.

It will be understood that, although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of exemplary embodiments. As used herein, the term "and/or" includes any and all combinations of one or more of the associated listed items.

It will be understood that when an element is referred to as being "on," "connected to," or "coupled to" another element, it may be directly on, connected, or coupled to the other element or intervening elements may be present. In contrast, when an element is referred to as being "directly on," "directly connected to," or "directly coupled to" another element, no intervening elements may be present.

The terminology used herein is for the purpose of describing particular embodiments only and is not intended to be limiting of exemplary embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms (including technical and scientific terms) used herein have the same meaning as commonly understood by one of ordinary skill in the art to which exemplary embodiments belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The same elements are denoted by the same reference numerals throughout, and a repeated explanation thereof will not be given.

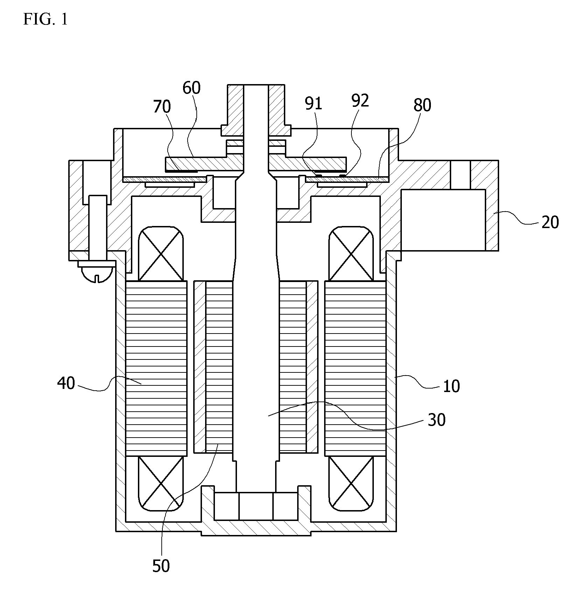

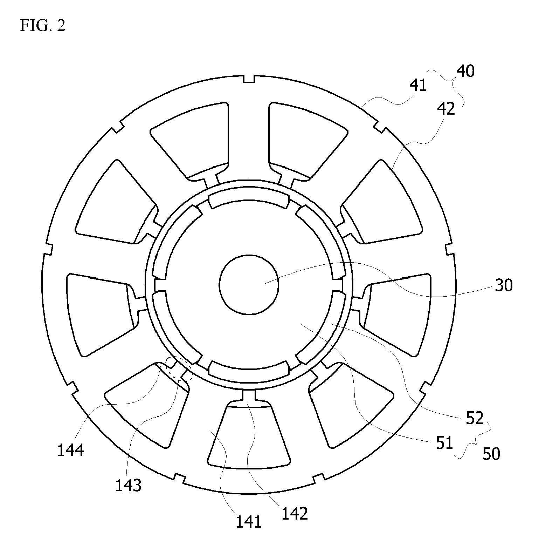

FIGS. 1 and 2 are respectively a longitudinal-sectional view and a cross-sectional view illustrating a general electronic power steering (EPS) motor.

Referring to FIGS. 1 and 2, the general EPS motor includes a housing 10, a bracket 20, a rotating shaft 30, a stator 40, and a rotor 50.

The housing 10 has a substantially cylindrical shape whose top is open, and the stator 40 and the rotor 50 are coupled to a space in the housing 10. Also, the bracket 20 is coupled to the top of the housing 10 to form an exterior appearance of the general EPS motor.

The rotating shaft 30 is rotatably supported by the housing 10 and the bracket 20.

A steering column of a vehicle is connected to the top of the rotating shaft 30 to provide power that helps a driver to steer as described above.

The rotor 50 into which a plurality of magnets are inserted is coupled to an outer circumferential surface of the rotating shaft 30. Also, the stator 40 including a core 41 and a coil 43 is coupled to an inner circumferential surface of the housing 10 to provide an electromagnetic force on an outer circumferential surface of the rotor 50.

The stator 40 is disposed on the inner circumferential surface of the housing 10. The stator 40 includes a stator core 41 (see FIG. 2), an insulator 42, and a coil 43 that are wound around the stator core 41.

Referring to FIG. 2, the stator core 41 has a substantially annular shape, and may be formed by stacking a plurality of silicon steel plates.

A plurality of teeth 141 are radially formed along an inner circumferential surface of the stator core 41. A slot 142 into which the coil 43 is inserted is disposed between adjacent teeth of the plurality of teeth 141. Adjacent teeth of the plurality of teeth 141 are spaced apart from each other by a predetermined interval due to the slot 142. Each of shoes 144 protrudes in a circumferential direction from an end of each of the teeth 141. Adjacent shoes of the shoes 144 are spaced apart from each other to form a slot opening 143.

The rotor 50 is coupled to the rotating shaft 30 to surround the outer circumferential surface of the rotating shaft 30, and is disposed in the stator 40. The rotor 50 includes a rotor core 51 and a plurality of magnets 52.

The rotor core 51 has a substantially cylindrical shape, and may be formed by stacking a plurality of silicon steel plates. A through-hole is axially formed in a central portion of the rotor core 51, and the rotating shaft 30 passes through and is fixed to the through-hole. The plurality of magnets 52 are buried along an outer circumferential surface of the rotor core 51 such that adjacent magnets of the magnets 52 are spaced apart from each other.

When a current is applied to the stator 40, the rotor 50 rotates due to electromagnetic interaction between the stator 40 and the rotor 50, and thus the rotating shaft 30 rotates due to the rotation of the rotor 50.

When the rotating shaft 30 is connected to the steering column (not shown) of the vehicle through a reduction gear (not shown), the steering column may also rotate due to the rotation of the rotating shaft 30. Accordingly, the general EPS motor helps the steering column to rotate as the driver swivels a steering wheel.

A printed circuit board (PCB) 80 is coupled to a top surface of the bracket 20.

Sensors 91 and 92 are disposed on a top surface of the PCB 80. The sensors 91 and 92 output a sensing signal that is used to calculate a rotation angle of the rotor 50 by detecting a change in polarity or magnetic flux of a sensing magnet 70. Each of the sensors 91 and 92 may be implemented with a hall integrated circuit (IC), and an encoder IC.

A plate 60 is disposed over the PCB 80 to face the PCB 80 and to be spaced apart from the PCB 80 by a predetermined interval. The plate 60 is coupled to the rotating shaft 30 to rotate along with the rotating shaft 30.

The sensing magnet 70 is disposed under the plate 60 to face the sensors 91 and 92 that are disposed on the top surface of the PCB 80. The sensing magnet 70 is coupled to the rotating shaft 30 and rotates along with the rotating shaft 30.

In designing a motor, it is important to determine a size of a slot opening in order to have optimal motor output and optimal cogging torque. The size of the slot opening may vary according to a motor model.

In particular, cogging torque is critically managed in a motor that requires high perceived quality such as an EPS motor.

According to embodiments of the present invention, there is provided an EPS motor that may reduce cogging torque by eliminating a slot opening of each slot.

The embodiments of the present invention will now be explained with reference to the attached drawings.

Hereinafter, a motor is an EPS motor, and the EPS motor includes a housing, a bracket that is coupled to the top of the housing, a rotating shaft that is supported by the housing and the bracket, a stator that is coupled to an inner circumferential surface of the housing, and a rotor that is coupled to an outer circumferential surface of the rotating shaft. Elements of the EPS motor have already been explained in detail with reference to FIG. 1, and thus a detailed repeated explanation thereof will not be given.

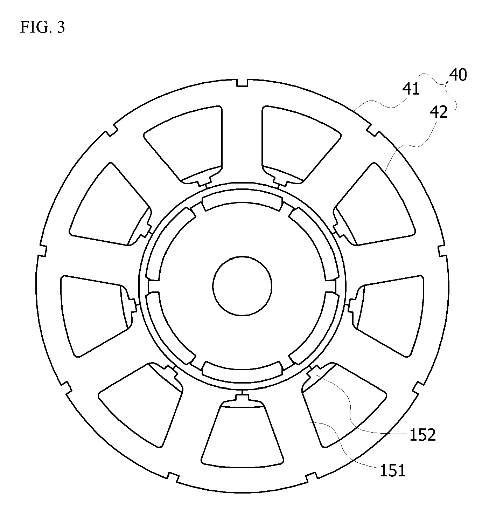

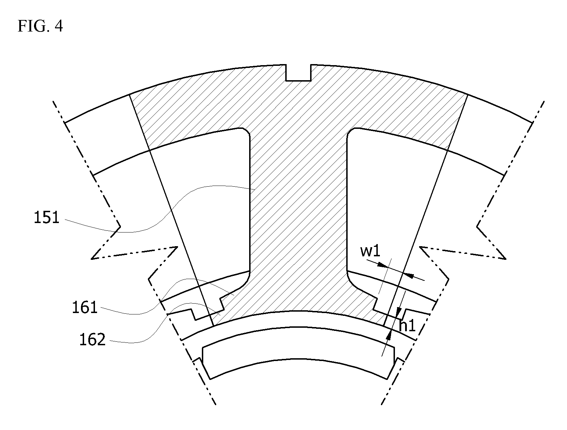

A motor according to an embodiment of the present invention will now be explained in detail with reference to FIGS. 3 and 4.

FIG. 3 is a cross-sectional view illustrating an EPS motor according to an embodiment of the present invention. Also, FIG. 4 is an enlarged cross-sectional view illustrating the stator core 41 of the EPS motor of FIG. 3.

Referring to FIGS. 3 and 4, the stator core 41 has a substantially annular shape, and is formed by stacking a plurality of silicon steel plates.

A plurality of teeth 151 are radially formed along an inner circumferential surface of the stator core 41. A slot 152 into which a coil is inserted is disposed between adjacent teeth of the plurality of teeth 151. The plurality of teeth 151 are formed such that adjacent teeth are spaced apart from each other by a predetermined interval due to the slot 152.

In each of the teeth 151, shoes 161, and tip portions 162 are integrally formed with each other.

The shoes 161 extend in a circumferential direction from both sides of an end of each of the teeth 151 facing an outer circumferential surface of the rotor 50. Also, the tip portions 162 extend in the circumferential direction from an end of each of the shoes 161 to contact tip portions of an adjacent tooth. The tip portions 162 are formed such that an end portion of each of the tip portions 162 and an end portion of each of the shoes 161 form a right angle therebetween, and maintain a predetermined thickness in the circumferential direction.

Accordingly, the slot 152 that is formed between adjacent teeth of the teeth 151 is formed to have no opening because the tip portion 162 closes the opening. Accordingly, a magnetic reluctance difference that may cause cogging torque may be removed.

A thickness h1 of the tip portion 162 in a radial direction is less than a thickness of the shoe 161 in the radial direction. The tip portion 162 may be formed to have a minimum thickness which a press forming method allows when the stator core 41 is manufactured using the press forming method. The thickness h1 of the tip portion 162 in the radial direction may be, for example, 0.5 mm.

Accordingly, magnetic loss that may occur due to leakage flux flowing to an adjacent tooth may be minimized, thereby preventing rated torque from being reduced.

That is, the less the thickness h1 of the tip portion 162, the earlier a magnetic saturation time. Accordingly, the tip portion 162 no longer functions as a magnetic body, and functions to suppress a flow of leakage flux using magnetic permeability that is similar to that of air.

The reduction in the magnetic loss further increases as a length w1 of the tip portion 162 in the circumferential direction increases.

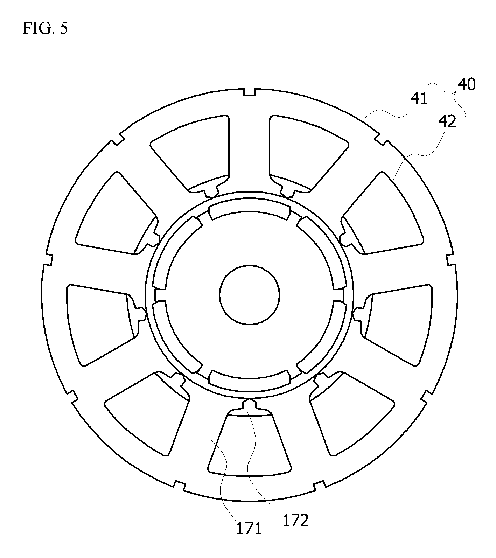

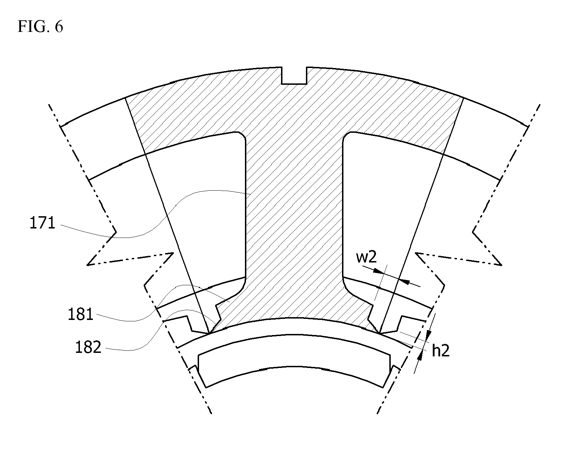

A motor according to another embodiment of the present invention will now be explained in detail with reference to FIGS. 5 and 6.

FIG. 5 is a cross-sectional view illustrating an EPS motor according to another embodiment of the present invention. Also, FIG. 6 is an enlarged cross-sectional view illustrating the stator core 41 of the EPS motor of FIG. 5.

Referring to FIGS. 5 and 6, the stator core 41 has a substantially annular shape, and is formed by stacking a plurality of silicon steel plates.

A plurality of teeth 171 are radially formed along an inner circumferential surface of the stator core 41. A slot 172 into which a coil is inserted is disposed between adjacent teeth of the plurality of teeth 171. The plurality of teeth 171 are formed such that adjacent teeth are spaced apart from each other by a predetermined interval due to the slot 172.

In each of the teeth 171, shoes 181, and tip portions 182 are integrally formed with each other.

The shoes 181 extend in a circumferential direction from an end of each of the teeth 171 facing an outer circumferential surface of the rotor 50. Also, the tip portions 182 extend from an end of each of the shoes 181 to contact tip portions of an adjacent tooth. The tip portions 182 are formed such that a thickness of each of the tip portions 182 decreases away from an end portion of each of the shoes 181, thereby having a sharp end.

In FIGS. 5 and 6, the slot 172 that is formed between adjacent teeth of the teeth 171 is formed such that an opening is closed by the tip portion 182. Accordingly, a magnetic reluctance difference that may cause cogging torque may be removed.

The tip portion 182 may be formed such that a maximum thickness h2 in a radial direction of the tip portion 182 has a minimum thickness which a press forming method allows when the stator core 41 is manufactured using the press forming method. The thickness h2 of the tip portion 182 may be, for example, 0.5 mm.

Accordingly, the tip portion 182 no longer functions as a magnetic body, and functions to suppress a flow of leakage flux using magnetic permeability that is similar to that of air.

The reduction in the magnetic loss further increases as a length w2 of the tip portion 182 in the circumferential direction increases.

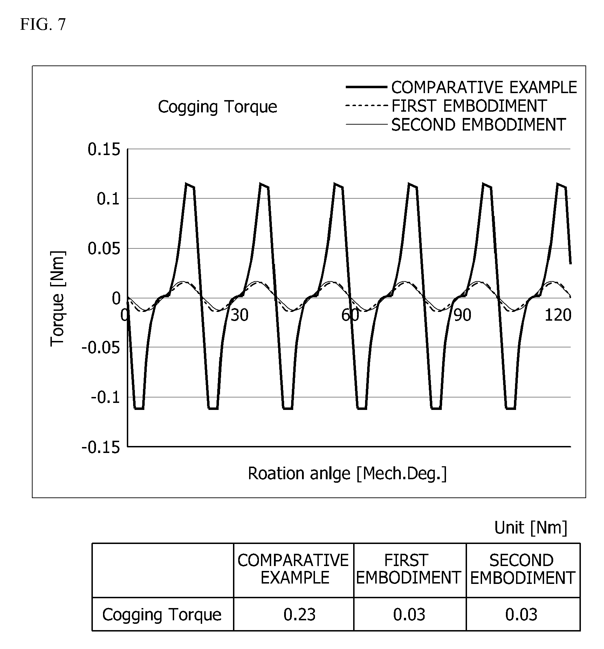

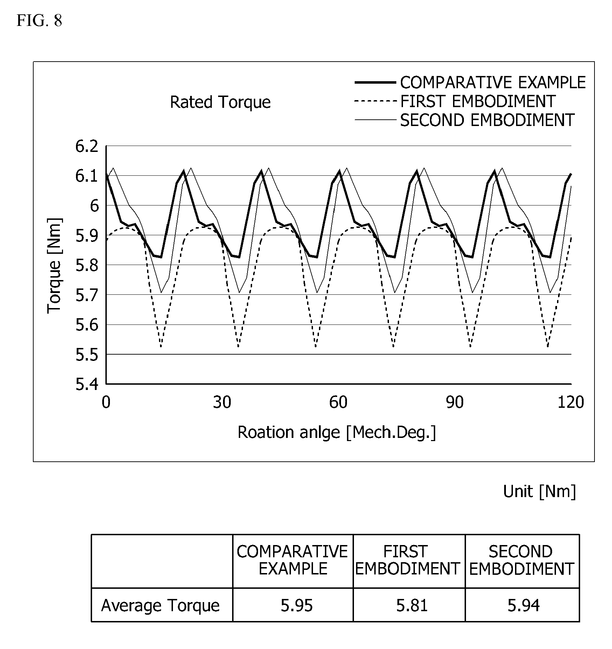

FIGS. 7 and 8 are views for describing effects of the EPS motors of FIGS. 3 and 5.

FIG. 7 is a graph illustrating a result obtained by comparing cogging torques of the general EPS motor of FIG. 2 and the EPS motors of FIGS. 3 and 5. Also, FIG. 8 is a graph illustrating a result obtained by comparing rated torques of the general EPS motor of FIG. 2, and the EPS motors of FIGS. 3 and 5.

Referring to FIG. 7, it is found that cogging torques of the EPS motors of FIGS. 3 and 5 are about 15% of that of the general EPS motor of FIG. 2.

Also, referring to FIG. 8, rated torques of the EPS motors of FIGS. 3 and 5 are slightly less than that of the general EPS motor of FIG. 2.

Accordingly, it is found that the EPS motors of FIGS. 3 and 5 greatly reduce cogging torque while maintaining rated torque that is almost similar to that of the general EPS motor of FIG. 2.

As described above, a motor according to the one or more embodiments of the present invention may almost constantly maintain rated torque and greatly reduce cogging torque compared to an existing motor.

While the inventive concept has been particularly shown and described with reference to exemplary embodiments thereof, they are provided for the purposes of illustration and it will be understood by those of ordinary skill in the art that various modifications and other equivalent embodiments can be made from the inventive concept.

## Claims

1. A motor comprising:
a stator (40) comprising a stator core (41) and a coil (43) that is wound around the stator core (41); and
a rotor (30) that is rotatably disposed in the stator (41),
wherein the stator core (41) comprises:
a plurality of teeth (151, 171) that are radially formed along an inner circumferential surface of the stator core (41);
a plurality of shoes (161, 181) that extend in a circumferential direction from both sides of an end of each of the plurality of teeth (151, 171); and
a tip portion (162, 182) that extends in the circumferential direction from an end of each of the plurality of shoes (161, 181),
wherein the tip portion (162, 182) contacts a tip portion of an adjacent tooth.

2. The motor of claim 1, wherein the tooth (151, 171), the shoe (161, 181), and the tip portion (162, 182) are integrally formed.

3. The motor of claim 1, wherein a thickness of the tip portion (162, 182) in a radial direction is less than a thickness of the shoe (161, 181) in the radial direction.

4. The motor of claim 1, wherein an end portion of the tip portion (162) and an end portion of the shoe (161) form a right angle therebetween.

5. The motor of claim 1, wherein an end portion of the tip portion (182) and an end portion of the shoe (181) form an obtuse angle therebetween.

6. The motor of claim 5, wherein a thickness of the tip portion (182) decreases away from the end portion of the shoe (181).

7. The motor of claim 1, further comprising a slot (152, 172) that is formed between adjacent teeth of the plurality of teeth,
wherein the slot (152, 172) is formed such that the slot (152, 172) is closed by the tip portion (162, 182).
